(19) Europäisches Patentamt
European Patent Office
Office européen des brevets

(11) **EP 4 092 654 B1**

(12) **EUROPEAN PATENT SPECIFICATION**

(45) Date of publication and mention
of the grant of the patent:
**20.08.2025 Bulletin 2025/34**

(21) Application number: **20914522.6**

(22) Date of filing: **17.01.2020**

(51) International Patent Classification (IPC):
**G09C 1/00** $^{(2006.01)}$    **H04L 9/08** $^{(2006.01)}$

(52) Cooperative Patent Classification (CPC):
**H04L 9/085; H04L 2209/46**

(86) International application number:
**PCT/JP2020/001546**

(87) International publication number:
**WO 2021/144974 (22.07.2021 Gazette 2021/29)**

(54) **SECRET MAXIMUM VALUE CALCULATION APPARATUS, METHOD AND PROGRAM**

VORRICHTUNG, VERFAHREN UND PROGRAMM ZUR BERECHNUNG EINES GEHEIMEN
MAXIMALWERTES

DISPOSITIF, PROCÉDÉ ET PROGRAMME DE CALCUL DE VALEURS MAXIMALES SECRÈTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2022 Bulletin 2022/47**

(73) Proprietor: **Nippon Telegraph And Telephone
Corporation
Chiyoda-ku
Tokyo 100-8116 (JP)**

(72) Inventors:
• **HAMADA, Koki
Musashino-shi, Tokyo 180-8585 (JP)**
• **KIKUCHI, Ryo
Musashino-shi, Tokyo 180-8585 (JP)**

(74) Representative: **MERH-IP Matias Erny Reichl
Hoffmann
Patentanwälte PartG mbB
Paul-Heyse-Straße 29
80336 München (DE)**

(56) References cited:
**JP-A- H0 764 766**

• **ATHANASIOS G GIANNOPOULOS: "NATIONAL
AND KAPODISTRIAN UNIVERSITY OF ATHENS
Privacy Preserving Medical Data Analytics using
Secure Multi Party Computation. An End-To-End
Use Case", 3 September 2018 (2018-09-03),
XP055650953, Retrieved from the Internet
<URL:https://jimouris.github.io/publications/
giannopoulosMouris2018thesis.pdf> [retrieved
on 20191209]**
• **MARTIN BURKHART ET AL: "Privacy-preserving
distributed network troubleshooting?bridging
the gap between theory and practice", ACM
TRANSACTIONS ON INFORMATION AND
SYSTEM SECURITY, ACM, NEW YORK, NY, US,
vol. 14, no. 4, 1 December 2011 (2011-12-01),
pages 31:1 - 31:30, XP001574932, ISSN:
1094-9224, [retrieved on 20111201], DOI: 10.1145/
2043628.2043632**
• **ANONYMOUS: "Design and Analysis of
Algorithms Max-Min Problem", 1 December 2018
(2018-12-01), XP093077528, Retrieved from the
Internet <URL:https://web.archive.org/web/
20181201104812/https://www.tutorialspoint.com/
design_and_analysis_of_algorithms/
design_and_analysis_of_algorithms_max_min_
problem.htm> [retrieved on 20230830]**

EP 4 092 654 B1

- **RASTOGI ASEEM ET AL: "Wysteria: A Programming Language for Generic, Mixed-Mode Multiparty Computations", 2014 IEEE SYMPOSIUM ON SECURITY AND PRIVACY, IEEE, 18 May 2014 (2014-05-18), pages 655 - 670, XP032686140, ISSN: 1081-6011, [retrieved on 20141113], DOI: 10.1109/SP.2014.48**
- **DANIEL DEMMLER ET AL: "ABY - A Framework for Efficient Mixed-Protocol Secure Two-Party Computation", PROCEEDINGS 2015 NETWORK AND DISTRIBUTED SYSTEM SECURITY SYMPOSIUM, 1 January 2015 (2015-01-01), Reston, VA, pages 1 - 15, XP055389193, ISBN: 978-1-891562-38-9, DOI: 10.14722/ndss.2015.23113**
- **VICTOR J DUVANENKO: "Parallel Divide-and-Conquer in C#", HTTPS://DUVANENKO.TECH.BLOG/, 25 December 2019 (2019-12-25), XP093164307, Retrieved from the Internet <URL:https://duvanenko.tech.blog/2019/12/25/parallel-divide-and-conquer-abstraction-in-c/>**
- **SATSUYA OHATA: "Round-Efficient Secure Two-Party Computation and Its Application to Privacy-Preserving Convolutional Neural Networks", IPSJ SYMPOSIUM SERIES: MULTIMEDIA, DISTRIBUTED, COOPERATIVE, AND MOBILE SYMPOSIUM, IPSJ, JAPAN, vol. 2018, no. 2, 15 October 2018 (2018-10-15) - 25 October 2018 (2018-10-25), Japan , pages 615 - 622, XP009533503, ISSN: 1882-0840**
- **NISHIDA, NAOHISA; OBA, TATSUMI; KATO, RYO; UNAGAMI, YUJI; YAMADA, SHOTA; ATTRAPADUNG, NUTTAPONG; TERUYA, TADANORI; MATSUDA, TAKIHI: "Private Machine Learning Classification Based on Binarized Neural Networks", IPSJ SYMPOSIUM SERIES: MULTIMEDIA, DISTRIBUTED, COOPERATIVE, AND MOBILE SYMPOSIUM, IPSJ, JAPAN, vol. 2017, no. 2, 16 October 2017 (2017-10-16), Japan , pages 592 - 599, XP009522378, ISSN: 1882-0840**

## Description

Technical Field

The present disclosure relates to an encryption applied technique, and particularly to a method of computing a maximum value and a flag of a maximum value without revealing input or output.

Background Art

There is a method called secure computation as a method of obtaining a specific operation result without restoring encrypted numerical values (see, for example, NPL 1). In the method disclosed in NPL 1, an encryption in which fragments of numerical values are distributed among three secure computation apparatuses is performed and a coordinate computation is performed by the three secure computation apparatuses, and thus, without restoring the numerical value, it is possible to retain a state where results of addition/subtraction, constant addition, multiplication, constant multiplication, logical operations (negation, logical product, logical sum, exclusive logical sum), and data format conversion (integer, binary) are distributed among three secure computation apparatuses, i.e., an encrypted state. For computation of the maximum value of n values encrypted by the secure computation and the flag of the maximum value, there is a method in which the current maximum value and the number of the element of the maximum value are held as a cipher text, sequential comparison with n cipher texts is performed, the maximum value and the number of the element of the maximum value are updated, and finally the flag is computed from the number (for example see NPL 2). NPL 3 focuses on providing an end-to-end infrastructure for computing privacy-preserving analytics, and more specifically, develops algorithms specifically tailored to encrypted architectures and in the SMPC scenario, such as secure aggregators and secure decision tree classifiers. MPL 4 first optimizes MPC comparison operations for processing high volume data in near real-time by not enforcing protocols to run in a constant number of synchronization rounds, then implements a complete set of basic MPC primitives in the SEPIA library, and develops, using these operations, four protocols tailored for distributed network monitoring and security applications: the entropy, distinct count, event correlation, and top-k protocols. NPL 5 proposes a divide and conquer approach to find the maximum and minimum numbers in a given array numbers[] of size n. NPL 6 presentsWysteria, a high-level programming language for writing Secure Multiparty Computation (SMC). NPL 7 designs and implements a mixed-protocol framework, called ABY, that efficiently combines secure computation schemes based on Arithmetic sharing, Boolean sharing, and Yao's garbled circuits and that makes available best practice solutions in secure two-party computation. NPL 8 describes the capabilities and simplicity of this Divide-and-Conquer abstraction.

Citation List

Non Patent Literature

NPL 1 CHIDA KOJI, HAMADA KOKI, IKARASHI DAI, TAKAHASHI KATSUMI, A Three-Party Secure Function Evaluation with Lightweight Verifiability Revisited, In CSS, 2010.
NPL 2 Sameer Wagh, Divya Gupta, and Nishanth Chandran. Securenn: 3-party secure computation for neural network training. Proceedings on Privacy Enhancing Technologies, Vol. 1, p. 24, 2019.
NPL 3 Athanasios G Giannopoulos, "NATIONAL AND KAPODISTRIAN UNIVERSITY OF ATHENS Privacy Preserving Medical Data Analytics using Secure Multi Party Computation. An End-To-End Use Case", 3 September 2018.
NPL 4 MARTIN BURKHART ET AL, "Privacy-preserving distributed network troubleshooting?bridging the gap between theory and practice", ACM TRANSACTIONS ON INFORMATION AND SYSTEM SECURITY, ACM, NEW YORK, NY, US, vol. 14, no. 4, 1 December 2011, pages 31:1 - 31:30.
NPL 5 Anonymous, "Design and Analysis of Algorithms Max-Min Problem", URL: https://web.archive.org/web/20181201104812/https://www.tutorialspoint.com/design_and_analysis    _of_algorithms/design_and_analysis_of_algorithms_max_min_problem.htm, 1 December 2018.
NPL 6 RASTOGI ASEEM ET AL, "Wysteria: A Programming Language for Generic, Mixed-Mode Multiparty Computations", 2014 IEEE SYMPOSIUM ON SECURITY AND PRIVACY, IEEE, 18 May 2014, pages 655 - 670.
NPL 7 DANIEL DEMMLER ET AL, "ABY - A Framework for Efficient Mixed-Protocol Secure Two-Party Computation", PROCEEDINGS 2015 NETWORK AND DISTRIBUTED SYSTEM SECURITY SYMPOSIUM, Reston, VA, 1 January 2015, pages 1 - 15.
NPL 8 Victor J Duvanenko: "Parallel Divide-and-Conquer in C#", https://duvanenko.tech.blog/, 25 December 2019.

Summary of the Invention

Technical Problem

In the known method; however, the number of comparison stages is as large as $\Theta(n)$ while the total number of comparisons for computing the maximum value is as large as $\Theta(n)$.

An object of the present disclosure is to provide a secure maximum value computation apparatus, a method, and a program whose processing time is reduced.

Means for Solving the Problem

The present disclosure provides a secure maximum value computation apparatus, a secure maximum value computation method, and a program, having the features of the respective independent claims.

A secure maximum value computation apparatus according to an aspect of the present disclosure includes an initialization unit that sets X' = X, assuming X = {$[[x_1]]$, $[[x_2]]$, ..., $[[x_n]]$}, a pair creation unit that creates, from among the X', one or more pairs such that no element in the X' is included in two or more pairs, a determination unit that determines, through secure computation, a secret value that is a larger value among $[[x_i]]$ and $[[x_j]]$ included in each of the one or more pairs, with respect to an order R for each of the one or more pairs that are created, a set updating unit that sets, as a new X', when there is a secret value that is not included in the one or more pairs in the X', a set including the secret value that is not included in the one or more pairs in the X' and the secret value determined by the determination unit, a control unit that performs a control to repeat, with the new X' as the X', processing operations of the pair creation unit, the determination unit, and the set updating unit until |X'| = 1 holds, and a flag determination unit that determines, with a secret value that is an only element of the X' that meets |X'| = 1 as a maximum value, a flag $[[z(x_i)]]$ (i = 1, ..., n) such that $[[z(x_g)]] = [[1]]$ holds when $[[x_g]]$ (g $\in$ [1, n]) is a maximum value and $[[z(x_i)]] = [[0]]$ holds when i $\neq$ g holds.

Effects of the Invention

The processing time can be reduced.

Brief Description of Drawings

Fig. 1 is a diagram illustrating an example of a functional configuration of a secure maximum value computation apparatus.
Fig. 2 is a diagram illustrating an example of a processing procedure of a secure maximum value computation method.
Fig. 3 is a diagram illustrating an example of a functional configuration of a computer.

Description of Embodiments

An embodiment of the present disclosure is elaborated below. Note that in the drawings, the components with the same function are denoted with the same reference numeral, and overlapping description thereof is omitted.

Notation

A value of a certain value a hid by encryption, secret sharing and the like is referred to as a secret value of a and represented as $[[a]]$. In the case where the hiding is performed by secret sharing, a set of fragments of the secret sharing held by each secure computation apparatus according to the $[[a]]$ is referenced.

Decryption

Processing of computing a value c that meets c = a with an input of a secret value $[[a]]$ of a is described as follows.
c $\leftarrow$ Open($[[a]]$)

Arithmetic Operation

In operations of addition, subtraction, and multiplication, secret values $[[c_1]]$, $[[c_2]]$ and $[[c_3]]$ of computation results $c_1$, $c_2$ and $c_3$ of a + b, a - b and ab, respectively, are computed with secret values $[[a]]$ and $[[b]]$ of two values a and b as inputs. Executions of these operations are described as follows.

$$[[c_1]] \leftarrow \text{Add}([[a]], [[b]])$$
$$[[c_2]] \leftarrow \text{Sub}([[a]], [[b]])$$
$$[[c_3]] \leftarrow \text{Mul}([[a]], [[b]])$$

In the case where there is no possibility of misunderstanding, Add([[a]], [[b]]), Sub([[a]], [[b]]) and Mul([[a]], [[b]]) are abbreviated as $[[a]] + [[b]]$, $[[a]] - [[b]]$ and $[[a]] \times [[b]]$, respectively.

Comparison

In comparison operation, the secret values $[[c_1]]$, $[[c_2]]$ and $[[c_3]]$ of Boolean values $c \in \{0, 1\}$ of $a = b$, $a \le b$, $a < b$, respectively, are computed with the secret values $[[a]]$ and $[[b]]$ of the two values a and b as inputs. The Boolean value is 1 when true and 0 when false. Executions of these operations are described as follows.

$$[[c_0]] \leftarrow \text{EQ}([[a]], [[b]])$$
$$[[c_1]] \leftarrow \text{LE}([[a]], [[b]])$$
$$[[c_2]] \leftarrow \text{LT}([[a]], [[b]])$$

Selection

In selection operation, with a secret value $[[c]]$ of a Boolean value $c \in \{0, 1\}$ and the secret values $[[a]]$ and $[[b]]$ of two values a and b as inputs, and

[Math 1]

$$d = \begin{cases} a & if \ c = 1, \\ b & otherwise \end{cases},$$

a secret value $[[d]]$ that meets Math 1 is computed. Execution of the above operation is described as follows.

$[[d]] \leftarrow \text{IfElse}([[c]], [[a]], [[b]])$ The above operation can be achieved by the following.
$[[d]] \leftarrow [[c]] \times ([[a]] - [[b]]) + [[b]]$

Secure Maximum Value Computation Apparatus and Method

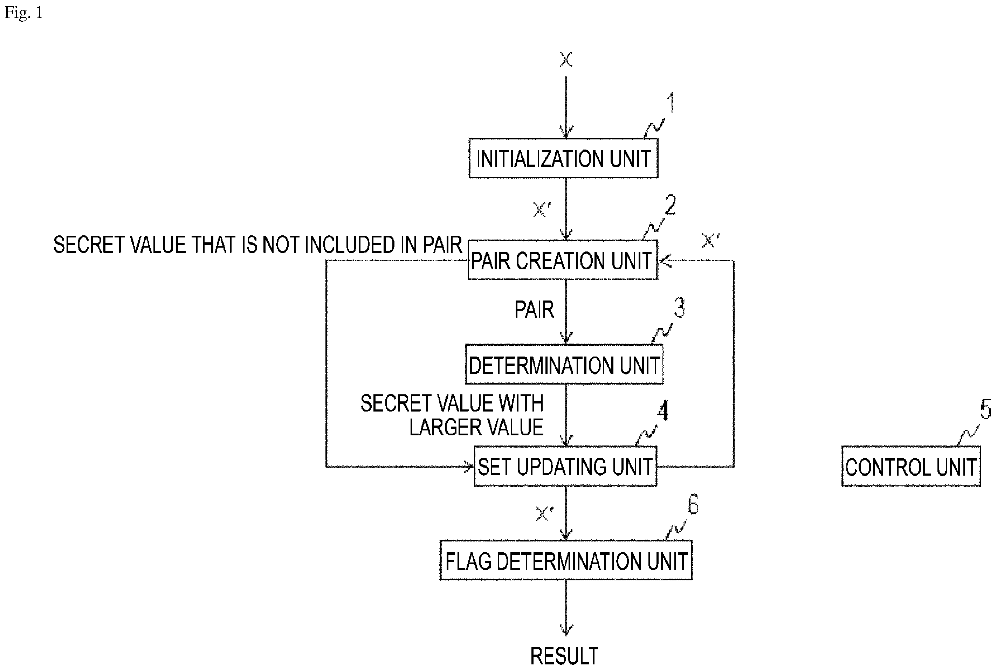

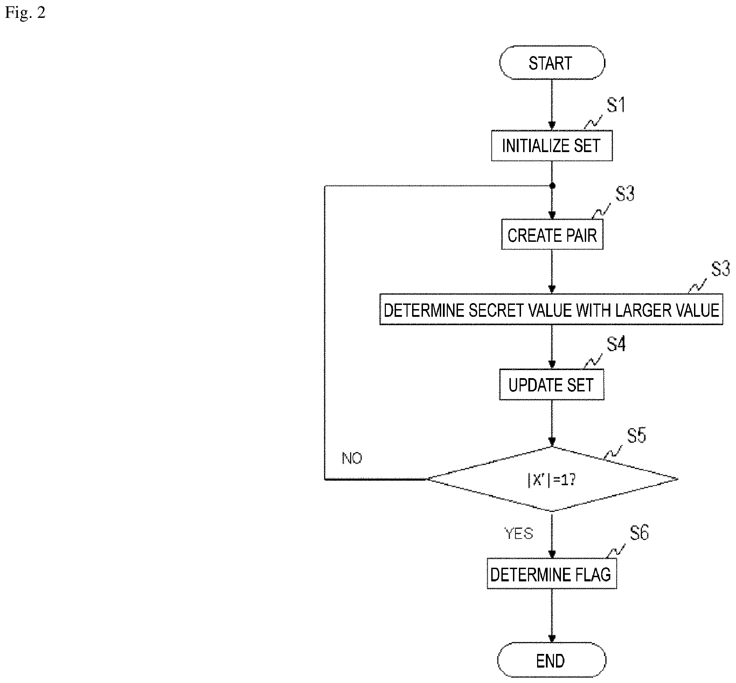

As illustrated in Fig. 1, a secure maximum value computation apparatus includes an initialization unit 1, a pair creation unit 2, a determination unit 3, a set updating unit 4, a control unit 5 and a flag determination unit 6, for example.
The secure maximum value computation method is achieved when the components of the secure maximum value computation apparatus perform the processing operations of steps S1 to S6 described below and illustrated in Fig. 2, for example.
Each component of the secure maximum value computation apparatus is described below.

Initialization Unit 1

$X = \{[[x_1]], [[x_2]], ..., [[x_n]]\}$ is input to the initialization unit 1. The n is a predetermined positive integer of 2 or greater. For example, $n \ge 4$ holds.
The initialization unit 1 initializes a set X' by setting X' = X (step S1).
The initialized X' is output to the pair creation unit 2.

Pair Creation Unit 2

The X' initialized by the initialization unit 1 is input to the pair creation unit 2. Note that in the second and subsequent processing operations of the pair creation unit 2, the X' updated by the set updating unit 4 is input.
The pair creation unit 2 creates one or more pairs such that no element in the X' is included in two or more pairs from among the input X' (step S2).
The created one or more pairs are output to the determination unit 3. In addition, when there is a secret value that is not included in the one or more pairs in the X', the secret value that is not included in the one or more pairs in the X' is output to the set updating unit 4.

The pair creation unit 2 creates two or more pairs at least once. In the case where $n \geq 4$ holds, comparison can be performed through computation of $n - 2$ stages or less.

Determination Unit 3

The one or more pairs created by the pair creation unit 2 are input to the determination unit 3.

For each of the one or more created pairs, the determination unit 3 determines, through secure computation, a secret value of a larger value among the $[[x_i]]$ and the $[[x_j]]$ included in each of the one or more pairs, with respect to an order R (step S3).

The determined secret value of the larger value is output to the set updating unit 4.

Set Updating Unit 4

The secret value of the larger value determined by the determination unit 3 is input to the set updating unit 4. In addition, when there is a secret value that is not included in the one or more pairs in the X', the secret value that is not included in the one or more pairs in the X' is input to the set updating unit 4.

When there is a secret value that is not included in the one or more pairs in the X', the set updating unit 4 sets, as a new X', a set including the secret value that is not included in one or more pairs in the X' and the secret value determined by the determination unit 3 (step S4).

Control Unit 5

The control unit 5 performs a control to repeat, with the new X' generated by the set updating unit 4 as X', the processing operations of the pair creation unit 2, the determination unit 3 and the set updating unit 4 until $|X'| = 1$ holds (step S5).

Here, $|X'|$ is the number of elements included in the set X'.

The X' that meets $|X'| = 1$ is output to the flag determination unit 6.

Flag Determination Unit 6

The X' that meets $|X'|=1$ is input to the flag determination unit 6.

With a secret value that is an only element of the X' that meets $|X'| = 1$ as a maximum value, the flag determination unit 6 determines a flag $[[z(x_i)]]$ ($i = 1, ..., n$) such that $[[z(x_g)]] = [[1]]$ holds when $[[x_g]]$ ($g \in [1, n]$) is a maximum value and $[[z(x_i)]] = [[0]]$ holds when $i \neq g$ holds (step S6).

The flag determination unit 6 determines the flag $[[z(x_i)]]$ by performing the following processing operations (a) and (b), on $[x_i]$ that is included in the X' even once. The computation of the flag $[[z(x_i)]]$ is performed in the reverse order of the computations of the pair creation unit 2, the determination unit 3, the set updating unit 4 and the control unit 5.

(a) The flag determination unit 6 sets $[[z(x_g)]] = [[1]]$ when $[[x_i]]$ is $[[x_g]]$.
(b) When the $[[x_k]]$ is computed by the comparison between the $[[x_i]]$ and the $[[x_j]]$ and the $[[z(x_k)]]$ has already been computed, the flag determination unit 6 uses the comparison result of the $[[x_i]]$ and the $[[x_j]]$, and the $[[z(x_k)]]$ to perform computation such that $[[z(x+)]] = [[x_k]]$ holds for $[[x+]]$, which is the larger one of the $[[x_i]]$ and the $[[x_j]]$, and that $[[z(x-)]] = [[0]]$ holds for $[[x-]]$, which is not the larger one of the $[[x_i]]$ and the $[[x_j]]$.

In a known method, the maximum value is sequentially updated from a set of secret values while maintaining the maximum value, and as such the number of comparison stages is $\Theta(n)$. On the other hand, a small number of comparison stages can be achieved by recursively calculating the maximum value while exponentially reducing the problem as in the above embodiment.

To be more specific, in the case where a secret value of a maximum value and a secret value of a flag indicating whether it is the maximum value are computed from a set of secret values with a size n, the number of comparison stages is $\Theta(n)$ in the known method. Conversely, in the secure maximum value computation apparatus and method according to the present disclosure, the number of comparison stages can be reduced while maintaining the total number of comparisons at $\Theta(n)$ by appropriately selecting the comparison order.

Example of Algorithm

An example of an algorithm achieved by the above-mentioned secure maximum value computation apparatus and method is described below. In this algorithm, in creation of pairs, $\lfloor |X'|/2 \rfloor$ pairs are created. Note that $\lfloor |X'|/2 \rfloor$ is a maximum integer of $|X'|/2$ or smaller. With this algorithm, the number of comparison stages can be asymptotically set to $O(\log n)$ for n.

$$\text{Input: } X = \{[[x_1]], ..., [[x_n]]\}$$

Output: $[[y]], [[z(x_1)]], ..., [[z(x_n)]]$

Notation: $[[y]], [[z(x_1)]], ..., [[z(x_n)]] \leftarrow f([[x_1]], ..., [[x_n]])$

(1) If n = 1 holds, return $[[y]] = [[x_1]]$ and $[[z(x_1)]] = [[1]]$, and terminate.

(2) When n is a multiple of 2, execute the following (2-a) to (2-f).

(2-a) $h \leftarrow n/2$

(2-b) $[[f_i]] \leftarrow LE([[x_i]], [[x_{i+h}]])$ $(i \in [1, h])$

(2-c) $[[m_i]] \leftarrow IfElse([[f_i]], [[x_{i+h}]], [[x_i]])$ $(i \in [1, h])$

(2-d) $[[y]], [[z(m_1)]], ..., [[z(m_h)]] \leftarrow f([[m_1]], ..., [[m_h]])$

(2-e) $[[z(x_i)]] \leftarrow [[z(m_i)]] \times (1 - [[f_i]])$ $(i \in [1, h])$

(2-f) $[[z(x_{i+h})]] \leftarrow [[z(m_i)]] \times [[f_i]]$ $(i \in [1, h])$

(3) When n is not a multiple of 2, execute the following.

(3-a) $h \leftarrow (n - 1)/2$

(3-b) $[[f_i]] \leftarrow LE([[x_i]], [[x_{i+h}]])$ $(i \in [1, h])$

(3-c) $[[m_i]] \leftarrow IfElse([[f_i]], [[x_{i+h}]], [[x_i]])$ $(i \in [1, h])$

(3-d) $[[m_{h+1}]] \leftarrow [[x_n]]$

(3-e) $[[y]], [[z(m_1)]], ..., [[z(m_h)]], [[z(m_{h+1})]] \leftarrow f([[m_1]], ..., [[m_{h+1}]])$

(3-f) $[[z(x_i)]] \leftarrow [[z(m_i)]] \times (1 - [[f_i]])$ $(i \in [1, h])$

(3-g) $[[z(x_{i+h})]] \leftarrow [[z(m_i)]] \times [[f_i]]$ $(i \in [1, h])$

(3-h) $[[z(x_n)]] \leftarrow [[z(m_{h+1})]]$

In (2-b), (2-c), (3-b) and (3-c), a pair of $[[x_i]]$ and $[[x_{i+h}]]$ is used. Although not explicitly stated in the above-mentioned algorithm, this creation of the pair corresponds to the process of the pair creation unit 2.

(2-b), (2-c), (3-b) and (3-c) correspond to the processing of the determination unit 3.

In (2-d), a recursive algorithm is performed on a new set $[[m_1]], ..., [[m_h]]$. This new set $[[m_1]], ..., [[m_h]]$ corresponds to X'. The determination of this new set $X' = [[m_1]], ..., [[m_h]]$ corresponds to the processing of the set updating unit 4.

Likewise, in (3-d) and (3-e), a recursive algorithm is performed on a new set $[[m_1]], ..., [[m_{h+1}]]$. This new set $[[m_1]], ..., [[m_{h+1}]]$ corresponds to X'. The determination of this new set $X' = [[m_1]], ..., [[m_{h+1}]]$ corresponds to the process of the set updating unit 4.

In addition, the part where the algorithm is recursively performed in (2-d) and (3-e) corresponds to the processing of the control unit 5.

(3-f), (3-g) and (3-h) correspond to the processing of the flag determination unit 6.

Modified Examples

Although the embodiments of the present disclosure have been described above, a specific configuration is not limited to the embodiments, the present disclosure, of course, also includes configurations appropriately changed in design.

The various kinds of processing described in the embodiments are not only implemented in the described order in a time-series manner but may also be implemented in parallel or separately as necessary or in accordance with a processing capability of the apparatus which performs the processing.

For example, the exchange of data between the components of the secure maximum value computation apparatus may be performed directly or via a storage unit not illustrated.

Program and Recording Medium

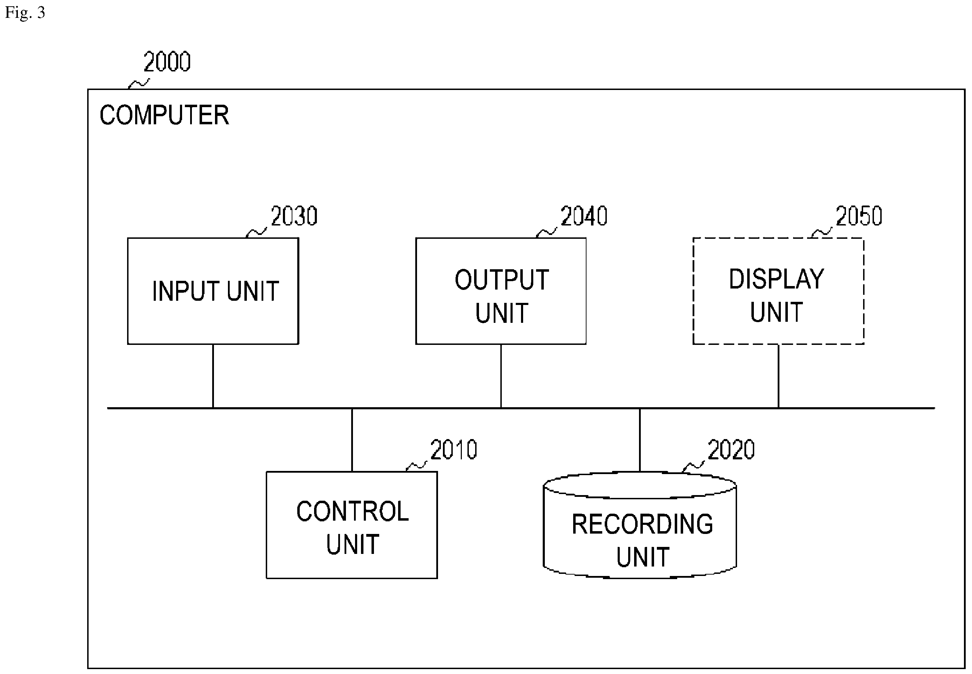

When various processing functions in the devices described above are implemented by a computer, processing details of the functions that each of the devices should have are described by a program. In addition, when the program is executed by the computer, the various processing functions of each device described above are implemented on the computer. For example, a variety of processing described above can be performed by causing a recording unit 2020 of the computer illustrated in Fig. 3 to read a program to be executed and causing a control unit 2010, an input unit 2030, an output unit 2040, and the like to execute the program.

The program in which the processing details are described can be recorded on a computer-readable recording medium. The computer-readable recording medium, for example, may be any type of medium such as a magnetic recording device, an optical disc, a magneto-optical recording medium, or a semiconductor memory.

In addition, the program is distributed, for example, by selling, transferring, or lending a portable recording medium such as a DVD or a CD-ROM with the program recorded on it. Further, the program may be stored in a storage device of a server computer and transmitted from the server computer to another computer via a network, so that the program is distributed.

For example, a computer executing the program first temporarily stores the program recorded on the portable recording medium or the program transmitted from the server computer in its own storage device. When executing the processing, the computer reads the program stored in its own storage device and executes the processing in accordance with the read program. Further, as another execution form of this program, the computer may directly read the program from the portable recording medium and execute processing in accordance with the program, or, further, may sequentially execute the processing in accordance with the received program each time the program is transferred from the server computer to the computer. In addition, it can also be configured to execute the processing described above through a so-called application service provider (ASP) type service in which processing functions are implemented just by issuing an instruction to execute the program and obtaining results without transmitting the program from the server computer to the computer. Further, the program in this form is assumed to include information which is provided for processing of a computer and is equivalent to a program (data or the like that has characteristics of defining the processing of the computer rather than being a direct instruction to the computer).

In addition, although the device is configured by executing a predetermined program on a computer in this form, at least a part of the processing details may be implemented by hardware.

Reference Signs List

1 Initialization unit
2 Pair creation unit
3 Determination unit
4 Set updating unit
5 Control unit
6 Flag determination unit

**Claims**

1.  A secure maximum value computation apparatus comprising:

    an initialization unit (1) configured to set X' = X, assuming $X = \{[[x_1]], [[x_2]], ..., [[x_n]]\}$, wherein a value of a certain value a hid by encryption, secret sharing, or the like is referred to as a secret value of a and is represented as $[[a]]$;
    a pair creation unit (2) configured to create, from among the X', one or more pairs in such a manner that no element in the X' is included in two or more pairs;
    a determination unit (3) configured to determine, through secure computation, a secret value that is a larger value among $[[x_i]]$ and $[[x_j]]$ included in each of the one or more pairs, with respect to an order R for each of the one or

8

more pairs that are created;

a set updating unit (4) configured to set, as a new X', when there is a secret value that is not included in the one or more pairs in the X', a set including the secret value that is not included in the one or more pairs in the X' and the secret value determined by the determination unit (3);

a control unit (5) configured to perform a control to repeat, with the new X' as the X', processing operations of the pair creation unit (2), the determination unit (3), and the set updating unit (4) until $|X'| = 1$ holds; and

a flag determination unit (6) configured to determine, with a secret value that is an only element of the X' that meets $|X'| = 1$ as a maximum value, a flag $[[z(x_i)]]$ ($i = 1, ..., n$) in such a manner that $[[z(x_g)]] = [[1]]$ holds when $[[x_g]]$ ($g \in [1, n]$) is a maximum value and $[[z(x_i)]] = [[0]]$ holds when $i \neq g$ holds,

**characterized in that** the pair creation unit (2) is configured to create two or more pairs at least once; and the flag determination unit (6) determines the flag $[[z(x_i)]]$ ($i = 1, ..., n$) by performing following processing operations (a) and (b), on $[x_i]$ that is included in the X' even once:

(a) the flag determination unit (6) sets $[[z(x_g)]] = [[1]]$ when $[[x_i]]$ is $[[x_g]]$, and

(b) when $[[x_k]]$ is computed by the comparison between $[[x_i]]$ and $[[x_j]]$ and $[[z(x_k)]]$ has already been computed, the flag determination unit (6) uses the comparison result of $[[x_i]]$ and $[[x_j]]$, and $[[z(x_k)]]$ to perform computation such that $[[z(x+)]] = [[x_k]]$ holds for $[[x+]]$, which is the larger one of $[[x_i]]$ and $[[x_j]]$, and that $[[z(x-)]] = [[0]]$ holds for $[[x-]]$, which is not the larger one of $[[x_i]]$ and $[[x_j]]$,

wherein the computation of the flag $[[z(x_i)]]$ is performed in the reverse order of the computations of the pair creation unit (2), the determination unit (3), the set updating unit (4) and the control unit (5).

2. A secure maximum value computation method comprising:

setting (S1), by an initialization unit, X' = X, assuming $X = \{[[x_1]], [[x_2]], ..., [[x_n]]\}$, wherein a value of a certain value a hid by encryption, secret sharing, or the like is referred to as a secret value of a and is represented as $[[a]]$;

creating (S2), by a pair creation unit, from among the X', one or more pairs in such a manner that no element in the X' is included in two or more pairs;

determining (S3), by a determination unit, through secure computation, a secret value that is a larger value among $[[x_i]]$ and $[[x_j]]$ included in each of the one or more pairs, with respect to an order R for each of the one or more pairs that are created;

setting (S4), by a set updating unit, as a new X', when there is a secret value that is not included in the one or more pairs in the X', a set including the secret value that is not included in the one or more pairs in the X' and the secret value determined by the determination unit;

performing (S5), by a control unit, a control to repeat, with the new X' as the X', processing operations of the pair creation unit, the determination unit, and the set updating unit until $|X'| = 1$ holds; and

determining (S6), by a flag determination unit, with a secret value that is an only element of the X' that meets $|X'| = 1$ as a maximum value, a flag $[[z(x_i)]]$ ($i = 1, ..., n$) in such a manner that $[[z(x_g)]] = [[1]]$ holds when $[[x_g]]$ ($g \in [1, n]$) is a maximum value and $[[z(x_i)]] = [[0]]$ holds when $i \neq g$ holds,

**characterized in that** the pair creation unit is configured to create two or more pairs at least once; and the flag determination unit (6) determines the flag $[[z(x_i)]]$ ($i = 1, ..., n$) by performing following processing operations (a) and (b), on $[x_i]$ that is included in the X' even once:

(a) the flag determination unit (6) sets $[[z(x_g)]] = [[1]]$ when $[[x_i]]$ is $[[x_g]]$, and

(b) when $[[x_k]]$ is computed by the comparison between $[[x_i]]$ and $[[x_j]]$ and $[[z(x_k)]]$ has already been computed, the flag determination unit (6) uses the comparison result of $[[x_i]]$ and $[[x_j]]$, and $[[z(x_k)]]$ to perform computation such that $[[z(x+)]] = [[x_k]]$ holds for $[[x+]]$, which is the larger one of $[[x_i]]$ and $[[x_j]]$, and that $[[z(x-)]] = [[0]]$ holds for $[[x-]]$, which is not the larger one of $[[x_i]]$ and $[[x_j]]$,

wherein the computation of the flag $[[z(x_i)]]$ is performed in the reverse order of the computations of the pair creation unit, the determination unit, the set updating unit and the control unit.

3. A program configured to cause a computer to operate as each unit of the secure maximum value computation apparatus according to claim 1.

**Patentansprüche**

1. Vorrichtung zur Berechnung eines sicheren Maximalwerts mit:

einer Initialisierungseinheit (1), die dazu konfiguriert ist, unter der Annahme, dass $X = \{[[x_1]], [[x_2]], ..., [[x_n]]\}$, $X' = X$ zu setzen, wobei ein Wert eines bestimmten Werts a, der durch Verschlüsselung, geheimes Teilen oder dergleichen versteckt wird, als geheimer Wert von a bezeichnet wird und als $[[a]]$ dargestellt wird;

einer Paarerzeugungseinheit (2), die dazu konfiguriert ist, aus dem X' ein oder mehrere Paare derart zu erzeugen, dass kein Element in dem X' in zwei oder mehr Paaren enthalten ist;

einer Bestimmungseinheit (3), die dazu konfiguriert ist, durch sichere Berechnung einen geheimen Wert, der ein größerer Wert unter $[[x_i]]$ und $[[x_j]]$ ist, die in jedem des einen oder der mehreren Paare enthalten sind, in Bezug auf eine Reihenfolge R für jedes des einen oder der mehreren Paare, die erzeugt werden, zu bestimmen;

einer Satzaktualisierungseinheit (4), die dazu konfiguriert ist, wenn es einen geheimen Wert gibt, der nicht in dem einen oder den mehreren Paaren in dem X' enthalten ist, einen Satz, der den geheimen Wert, der nicht in dem einen oder den mehreren Paaren in dem X' enthalten ist, und den geheimen Wert, der durch die Bestimmungseinheit (3) bestimmt wird, enthält, als ein neues X' zu setzen;

einer Steuereinheit (5), die dazu konfiguriert ist, eine Steuerung durchzuführen, um mit dem neuen X' als dem X' Verarbeitungsoperationen der Paarerzeugungseinheit (2), der Bestimmungseinheit (3) und der Satzaktualisierungseinheit (4) zu wiederholen, bis $|X'| = 1$ gilt; und

einer Flag-Bestimmungseinheit (6), die dazu konfiguriert ist, mit einem geheimen Wert, der ein einziges Element des X' ist, das $|X'| = 1$ erfüllt, als einen Maximalwert ein Flag $[[z(x_i)]]$ (i = 1, ..., n) derart zu bestimmen, dass $[[z(x_g)]] = [[1]]$ gilt, wenn $[[x_g]]$ (g $\in$ [1, n]) ein Maximalwert ist, und $[[z(x_i)]] = [[0]]$ gilt, wenn i $\neq$ g gilt,

**dadurch gekennzeichnet, dass** die Paarerzeugungseinheit (2) dazu konfiguriert ist, mindestens einmal zwei oder mehr Paare zu erzeugen; und

die Flag-Bestimmungseinheit (6) das Flag $[[z(x_i)]]$ (i = 1, ..., n) bestimmt, indem sie die folgenden Verarbeitungsoperationen (a) und (b) an dem $[x_i]$, das in dem X' selbst einmal enthalten ist, durchführt:

(a) die Flag-Bestimmungseinheit (6) setzt $[[z(x_g)]] = [[1]]$, wenn $[[x_i]]$ gleich $[[x_g]]$ ist, und

(b) wenn $[[x_k]]$ durch den Vergleich zwischen $[[x_i]]$ und $[[x_j]]$ berechnet wird und $[[z(x_k)]]$ bereits berechnet worden ist, verwendet die Flag-Bestimmungseinheit (6) das Vergleichsergebnis von $[[x_i]]$ und $[[xj]]$ und $[[z(x_k)]]$, um eine Berechnung derart durchzuführen, dass $[[z(x+)]] = [[x_k]]$ für $[[x+]]$ gilt, das das größere von $[[x_i]]$ und $[[x_j]]$ ist, und dass $[[z(x-)]] = [[0]]$ für $[[x-]]$ gilt, das nicht das größere von $[[x_i]]$ und $[[x_j]]$ ist,

wobei die Berechnung des Flags $[[z(x_i)]]$ in der umgekehrten Reihenfolge der Berechnungen der Paarerzeugungseinheit (2), der Bestimmungseinheit (3), der Satzaktualisierungseinheit (4) und der Steuereinheit (5) durchgeführt wird.

2. Verfahren zur Berechnung eines sicheren Maximalwerts mit:

Setzen (S1) von X' = X durch eine Initialisierungseinheit unter der Annahme, dass $X = \{[[x_1]], [[x_2]], ..., [[x_n]]\}$, wobei ein Wert eines bestimmten Werts a, der durch Verschlüsselung, geheimes Teilen oder dergleichen versteckt wird, als geheimer Wert von a bezeichnet wird und als $[[a]]$ dargestellt wird;

Erzeugen (S2) eines oder mehrerer Paare durch eine Paarerzeugungseinheit aus dem X' derart, dass kein Element in dem X' in zwei oder mehr Paaren enthalten ist;

Bestimmen (S3) eines geheimen Werts, der ein größerer Wert unter $[[x_i]]$ und $[[x_j]]$ ist, die in jedem des einen oder der mehreren Paare enthalten sind, durch eine Bestimmungseinheit durch sichere Berechnung in Bezug auf eine Reihenfolge R für jedes des einen oder der mehreren Paare, die erzeugt werden;

Setzen (S4) eines Satzes, der den geheimen Wert, der nicht in dem einen oder den mehreren Paaren in dem X' enthalten ist, und den geheimen Wert, der durch die Bestimmungseinheit bestimmt wird, enthält, durch eine Satzaktualisierungseinheit als ein neues X', wenn es einen geheimen Wert gibt, der nicht in dem einen oder den mehreren Paaren in dem X' enthalten ist;

Durchführen (S5) einer Steuerung durch eine Steuereinheit, um mit dem neuen X' als dem X' Verarbeitungsoperationen der Paarerzeugungseinheit, der Bestimmungseinheit und der Satzaktualisierungseinheit zu wiederholen, bis $|X'| = 1$ gilt; und

Bestimmen (S6) eines Flag $[[z(x_i)]]$ (i = 1, ..., n) durch eine Flag-Bestimmungseinheit mit einem geheimen Wert, der ein einziges Element des X' ist, das $|X'| = 1$ erfüllt, als einen Maximalwert derart, dass $[[z(x_g)]] = [[1]]$ gilt, wenn $[[x_g]]$ (g $\in$ [1, n]) ein Maximalwert ist, und $[[z(x_i)]] = [[0]]$ gilt, wenn i $\neq$ g gilt,

**dadurch gekennzeichnet, dass** die Paarerzeugungseinheit dazu konfiguriert ist, mindestens einmal zwei oder mehr Paare zu erzeugen; und
die Flag-Bestimmungseinheit (6) das Flag $[[z(x_i)]]$ (i = 1, ..., n) bestimmt, indem sie die folgenden Verarbeitungsoperationen (a) und (b) an dem $[x_i]$, das in dem X' selbst einmal enthalten ist, durchführt:

(a) die Flag-Bestimmungseinheit (6) setzt $[[z(x_g)]] = [[1]]$, wenn $[[x_i]]$ gleich $[[x_g]]$ ist, und
(b) wenn $[[x_k]]$ durch den Vergleich zwischen $[[x_i]]$ und $[[x_j]]$ berechnet wird und $[[z(x_k)]]$ bereits berechnet worden ist, verwendet die Flag-Bestimmungseinheit (6) das Vergleichsergebnis von $[[x_i]]$ und $[[x_j]]$ und $[[z(x_k)]]$, um eine Berechnung derart durchzuführen, dass $[[z(x+)]] = [[x_k]]$ für $[[x+]]$ gilt, das das größere von $[[x_i]]$ und $[[x_j]]$ ist, und dass $[[z(x-)]] = [[0]]$ für $[[x-]]$ gilt, das nicht das größere von $[[x_i]]$ und $[[x_j]]$ ist,

wobei die Berechnung des Flags $[[z(x_i)]]$ in der umgekehrten Reihenfolge der Berechnungen der Paarerzeugungseinheit, der Bestimmungseinheit, der Satzaktualisierungseinheit und der Steuereinheit durchgeführt wird.

3. Programm, das dazu konfiguriert ist, einen Computer zu veranlassen, als jede Einheit der Vorrichtung zur Berechnung eines sicheren Maximalwerts nach Anspruch 1 zu arbeiten.


**Revendications**

1. Appareil de calcul de valeur maximale sécurisée comprenant :

une unité d'initialisation (1) configurée pour définir X' = X, en supposant que X = $\{[[x_1]], [[x_2]], ..., [[x_n]]\}$, dans lequel une valeur d'une certaine valeur a cachée par cryptage, partage de secret ou similaire est appelée valeur secrète de a et est représentée par $[[a]]$ ;
une unité de création de paire (2) configurée pour créer, parmi les X', une ou plusieurs paires de telle manière qu'aucun élément dans les X' n'est inclus dans deux paires ou plus ;
une unité de détermination (3) configurée pour déterminer, par le biais d'un calcul sécurisé, une valeur secrète qui est une valeur plus grande parmi $[[x_i]]$ et $[[x_j]]$ inclus dans chacune des une ou plusieurs paires, par rapport à un ordre R pour chacune des une ou plusieurs paires qui sont créées ;
une unité de mise à jour d'ensemble (4) configurée pour définir, en tant que nouveau X', lorsqu'il existe une valeur secrète qui n'est pas incluse dans les une ou plusieurs paires dans les X', un ensemble incluant la valeur secrète qui n'est pas incluse dans les une ou plusieurs paires dans les X' et la valeur secrète déterminée par l'unité de détermination (3) ;
une unité de commande (5) configurée pour effectuer une commande pour répéter, avec le nouveau X' en tant que X', des opérations de traitement de l'unité de création de paire (2), de l'unité de détermination (3) et de l'unité de mise à jour d'ensemble (4) jusqu'à ce que |X'| = 1 soit satisfait ; et
une unité de détermination de drapeau (6) configurée pour déterminer, avec une valeur secrète qui est un seul élément des X' qui satisfait à |X'| = 1 en tant que valeur maximale, un drapeau $[[z(x_i)]]$ (i = 1, ..., n) de telle manière que $[[z(x_g)]] = [[1]]$ soit satisfait lorsque $[[x_g]]$ (g ∈ [1, n]) est une valeur maximale et que $[[z(x_i)]] = [[0]]$ soit satisfait lorsque i ≠ g est satisfait,
**caractérisé en ce que** l'unité de création de paire (2) est configurée pour créer deux paires ou plus au moins une fois ; et
l'unité de détermination de drapeau (6) détermine le drapeau $[[z(x_i)]]$ (i = 1, ..., n) en effectuant les opérations de traitement suivantes (a) et (b), sur $[x_i]$ qui est inclus dans les X' même une fois :

(a) l'unité de détermination de drapeau (6) définit $[[z(x_g)]] = [[1]]$ lorsque $[[x_i]]$ est $[[x_g]]$, et
(b) lorsque $[[x_k]]$ est calculé par la comparaison entre $[[x_i]]$ et $[[x_j]]$ et que $[[z(x_k)]]$ a déjà été calculé, l'unité de détermination de drapeau (6) utilise le résultat de comparaison de $[[x_i]]$ et $[[x_j]]$, et de $[[z(x_k)]]$ pour effectuer un calcul de telle sorte que $[[z(x+)]] = [[x_k]]$ soit satisfait pour $[[x+]]$, qui est le plus grand de $[[x_i]]$ et $[[x_j]]$, et que $[[z(x-)]] = [[0]]$ soit satisfait pour $[[x-]]$, qui n'est pas le plus grand de $[[x_i]]$ et $[[x_j]]$,

dans lequel le calcul du drapeau $[[z(x_i)]]$ est effectué dans l'ordre inverse des calculs de l'unité de création de paire (2), de l'unité de détermination (3), de l'unité de mise à jour d'ensemble (4) et de l'unité de commande (5).

2. Procédé de calcul de valeur maximale sécurisée comprenant :

la définition (S1), par une unité d'initialisation, de X' = X, en supposant que X = $\{[[x_1]], [[x_2]], ..., [[x_n]]\}$, dans lequel une valeur d'une certaine valeur a cachée par cryptage, partage de secret ou similaire est appelée valeur secrète de a et est représentée par [[a]] ;

la création (S2), par une unité de création de paire, parmi les X', d'une ou plusieurs paires de telle manière qu'aucun élément dans les X' n'est inclus dans deux paires ou plus ;

la détermination (S3), par une unité de détermination, par le biais d'un calcul sécurisé, d'une valeur secrète qui est une valeur plus grande parmi $[[x_i]]$ et $[[x_j]]$ inclus dans chacune des une ou plusieurs paires, par rapport à un ordre R pour chacune des une ou plusieurs paires qui sont créées ;

la définition (S4), par une unité de mise à jour d'ensemble, en tant que nouveau X', lorsqu'il existe une valeur secrète qui n'est pas incluse dans les une ou plusieurs paires dans les X', d'un ensemble incluant la valeur secrète qui n'est pas incluse dans les une ou plusieurs paires dans les X' et la valeur secrète déterminée par l'unité de détermination ;

l'exécution (S5), par une unité de commande, d'une commande pour répéter, avec le nouveau X' en tant que X', des opérations de traitement de l'unité de création de paire, de l'unité de détermination et de l'unité de mise à jour d'ensemble jusqu'à ce que |X'| = 1 soit satisfait ; et

la détermination (S6), par une unité de détermination de drapeau, avec une valeur secrète qui est un seul élément des X' qui satisfait à |X'| = 1 en tant que valeur maximale, d'un drapeau $[[z(x_i)]]$ (i = 1, ..., n) de telle manière que $[[z(x_g)]] = [[1]]$ soit satisfait lorsque $[[x_g]]$ (g ∈ [1, n]) est une valeur maximale et que $[[z(x_i)]] = [[0]]$ soit satisfait lorsque i ≠ g est satisfait,

**caractérisé en ce que** l'unité de création de paire est configurée pour créer deux paires ou plus au moins une fois ; et

l'unité de détermination de drapeau (6) détermine le drapeau $[[z(x_i)]]$ (i = 1, ..., n) en effectuant les opérations de traitement suivantes (a) et (b), sur $[x_i]$ qui est inclus dans les X' même une fois :

(a) l'unité de détermination de drapeau (6) définit $[[z(x_g)]] = [[1]]$ lorsque $[[x_i]]$ est $[[x_g]]$, et

(b) lorsque $[[x_k]]$ est calculé par la comparaison entre $[[x_i]]$ et $[[x_j]]$ et que $[[z(x_k)]]$ a déjà été calculé, l'unité de détermination de drapeau (6) utilise le résultat de comparaison de $[[x_i]]$ et $[[x_j]]$, et de $[[z(x_k)]]$ pour effectuer un calcul de telle sorte que $[[z(x+)]] = [[x_k]]$ soit satisfait pour $[[x+]]$, qui est le plus grand de $[[x_i]]$ et $[[x_j]]$, et que $[[z(x-)]] = [[0]]$ soit satisfait pour $[[x-]]$, qui n'est pas le plus grand de $[[x_i]]$ et $[[x_j]]$,

dans lequel le calcul du drapeau $[[z(x_i)]]$ est effectué dans l'ordre inverse des calculs de l'unité de création de paire, de l'unité de détermination, de l'unité de mise à jour d'ensemble et de l'unité de commande.

3. Programme configuré pour amener un ordinateur à fonctionner en tant que chaque unité de l'appareil de calcul de valeur maximale sécurisée selon la revendication 1.

Fig. 1

INITIALIZATION UNIT — 1

PAIR CREATION UNIT — 2

DETERMINATION UNIT — 3

SET UPDATING UNIT — 4

CONTROL UNIT — 5

FLAG DETERMINATION UNIT — 6

X
X'
X'
PAIR
X'
SECRET VALUE THAT IS NOT INCLUDED IN PAIR
SECRET VALUE WITH LARGER VALUE
RESULT

Fig. 2

Fig. 3

COMPUTER 2000

INPUT UNIT 2030

OUTPUT UNIT 2040

DISPLAY UNIT 2050

CONTROL UNIT 2010

RECORDING UNIT 2020

EP 4 092 654 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHIDA KOJI** ; **HAMADA KOKI** ; **IKARASHI DAI** ; **TAKAHASHI KATSUMI**. A Three-Party Secure Function Evaluation with Lightweight Verifiability Revisited. *CSS*, 2010
- **SAMEER WAGH** ; **DIVYA GUPTA** ; **NISHANTH CHANDRAN**. Securenn: 3-party secure computation for neural network training. *Proceedings on Privacy Enhancing Technologies*, 2019, vol. 1, 24
- **ATHANASIOS G GIANNOPOULOS**. Privacy Preserving Medical Data Analytics using Secure Multi Party Computation. *An End-To-End Use Case*, 03 September 2018
- Privacy-preserving distributed network troubleshooting?bridging the gap between theory and practice. **MARTIN BURKHART et al.** ACM TRANSACTIONS ON INFORMATION AND SYSTEM SECURITY. ACM, 01 December 2011, vol. 14, 31

- **ANONYMOUS**. *Design and Analysis of Algorithms Max-Min Problem*, 01 December 2018, https://web. archive.org/web/20181201104812/https://www.tutorialspoint.com/design_and_analysis _of_algorithms/design_and_analysis_of_algorithms_max_-min_problem.htm
- Wysteria: A Programming Language for Generic, Mixed-Mode Multiparty Computations. **RASTOGI ASEEM et al.** 2014 IEEE SYMPOSIUM ON SECURITY AND PRIVACY. IEEE, 18 May 2014, 655-670
- **DANIEL DEMMLER et al.** ABY - A Framework for Efficient Mixed-Protocol Secure Two-Party Computation. *PROCEEDINGS 2015 NETWORK AND DISTRIBUTED SYSTEM SECURITY SYMPOSIUM, Reston, VA*, 01 January 2015, 1-15
- **VICTOR J DUVANENKO**. *Parallel Divide-and-Conquer in C#*, 25 December 2019, https://duvanenko. tech.blog